(19) **Europäisches Patentamt**
**European Patent Office**
**Office européen des brevets**

(11) **EP 2 616 209 B1**

(12) **EUROPEAN PATENT SPECIFICATION**

(45) Date of publication and mention
of the grant of the patent:
**22.12.2021 Bulletin 2021/51**

(51) Int Cl.:
**B23K 26/36** (2014.01)    **B23K 26/04** (2014.01)
**H01S 3/10** (2006.01)

(21) Application number: **10857363.5**

(22) Date of filing: **13.09.2010**

(86) International application number:
**PCT/US2010/048634**

(87) International publication number:
**WO 2012/036664 (22.03.2012 Gazette 2012/12)**

(54) **INDUSTRIAL HIGH POWER FIBER LASER SYSTEM WITH OPTICAL MONITORING ASSEMBLY**

INDUSTRIELLES HOCHLEISTUNGS-FASERLASERSYSTEM MIT OPTISCHER ÜBERWACHUNGSANORDNUNG

SYSTÈME INDUSTRIEL LASER À FIBRES DE GRANDE PUISSANCE AVEC ENSEMBLE DE SURVEILLANCE OPTIQUE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**24.07.2013 Bulletin 2013/30**

(60) Divisional application:
**20164591.8 / 3 689 530**

(73) Proprietor: **IPG Photonics Corporation**
**Oxford, Massachusetts 01540 (US)**

(72) Inventors:
• **MORONI, Giovanni**
**I-20156 Milan (IT)**
• **COLOMBO, Daniele**
**I-20156 Milan (IT)**
• **PREVITALI, Barbara**
**I-20156 Milan (IT)**
• **CATTANEO, Stefano**
**20023 Cerro Maggiore (Milano) (IT)**
• **ROSSOTTI, Lorenzo**
**20023 Cerro Maggiore (Milano) (IT)**
• **GRAPOV, Yuri**
**Sutton, MA 01590 (US)**

(74) Representative: **Kohlmann, Kai**
**Donatusstraße 1**
**52078 Aachen (DE)**

(56) References cited:
WO-A1-2004/068204    WO-A2-2004/068652
GB-A- 2 458 304    JP-A- 2007 044 739
KR-A- 20090 017 084    KR-A- 20090 112 282

• **None**

## Description

### BACKGROUND OF THE DISCLOSURE

#### Field of the Disclosure

The disclosure relates to high power fiber laser systems (HPFLS) for processing material in industrial methods. In particular, the disclosure relates to a HPFLS system operative to generate a high quality output beam reaching kW levels. Furthermore, the disclosure relates to HPFLSs provided with an on-line monitoring assembly of the backreflected optical emission propagating through the optical combiner.

#### Prior Art Discussion

Laser-assisted welding, cutting, marking, drilling, cladding and other material processing industrial methods require precise control of a variety of fiber laser-assisted techniques. The high power fiber laser may output radiation in kilowatts. With such high-power outputs, the quality of the output beam presents became a focal point of research.

Accordingly, the power and quality of the laser beam are among essential laserrelated characteristics which may affect the material to be processed. Hence the information related, for example, to the conditions of the weld indicative of laser parameters should be closely monitored.

A continuous need therefore exists for a high power fiber laser industrial system operative to deliver a powerful, high quality light.

Furthermore, there is a need for a fiber combiner configured with a plurality of single mode feeding input fibers and operative to output a combined laser beam with an optimally small beam quality parameter $M^2$.

Finally, there is a need to provide a high power fiber laser system with a reliable monitoring system capable of correctly detecting backreflected radiation indicative of operating conditions of the laser modules and conditions of the surface of the workpiece to be processed by a powerful, high quality laser beam. An attempt to produce a higher intensity output is disclosed in WO2004/068652. The laser devices comprise optical fibers with laser active regions. Each of the fibers has a reflector disposed at one end and is connected to a combiner on the other end. A laser pump device for each fiber provides pump energy to the laser active regions. Light propagating in the fibers interacts so as to form inphase states. The array of fibers may be coupled either in pairs or altogether between the reflector and the laser active region.

### SUMMARY OF THE DISCLOSURE

The above-identified needs are met by the high power fiber laser system (HPFLS) according to claim 1, and a method for operating the HPFLS according to claim 8. The disclosed system is configured with one or more fiber laser modules having respective feeding fibers, which are combined together to define a fiber combiner, and with a monitoring assembly.

The combiner is configured from multiple feeding fibers and structured to guide the forward propagating radiation with the smallest possible $M^2$ factor — the reliable indication of the quality of light incident on the surface to be treated, as known to one of ordinary skills. In order to achieve the optima quality of light, the cumulative radiation of combined individual feeding fibers from respective laser modules should be as small as possible. The lower the M factor, the higher quality of the outcome of the material processing. The low cumulative radiation is attained by controllably modifying geometry of individual fibers and combiner so that the numerical aperture (NA) of the individual fibers and the NA the combiner output, which directly affects the M factor, are minimally possible.

The combiner may be configured with one or more spare fibers that can be further connected to a monitoring assembly operative to detect backreflected radiation. Accordingly, the combiner receives the backwards propagating radiation and guides the received backreflected radiation to the monitoring assembly.

### BRIEF DESCRIPTION OF THE DRAWINGS

The above and other features and advantages of the disclosure are discussed herein below in conjunction with the drawings, in which:

FIG. 1 is a diagrammatic view of the disclosed high fiber laser system provided with a monitoring assembly.

FIG. 2 is a simplified schematic of the monitoring assembly;

FIG. 3A and 3B respective side and end diagrammatic views of a fiber combiner;

FIG. 4 is a diagrammatic view of laser module;

FIG. 5 is a diagrammatic view of a fiber laser provided in the laser module;

FIG. 6 is an diagrammatic elevated view of laser head;

FIG. 7 is a view of shield holder preventing material particles, which leave the melted surface of the workpiece, from penetrating into the laser head.

### SPECIFIC DESCRIPTION

Reference will now be made in detail to the disclosed system. Wherever possible, same or similar reference numerals are used in the drawings and the description to refer to the same or like parts or steps. The drawings are in simplified form and are far from precise scale.

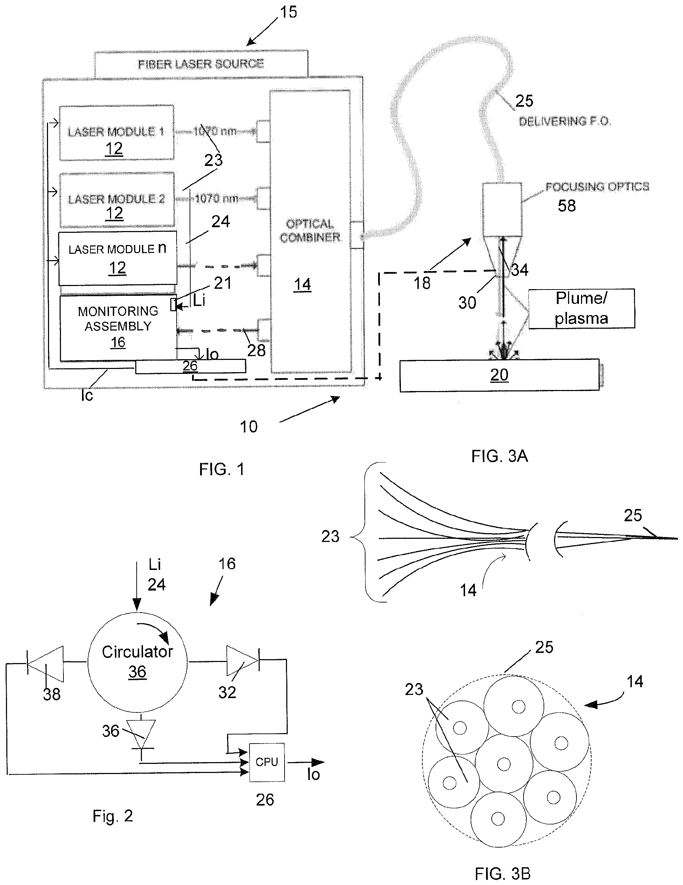

Referring to FIG. 1, a high power fiber laser system 10 is configured to provide for material processing including, but not limited to welding, cutting, marking, drilling, and cladding. The HPFLS 10 includes a fiber laser source 15 configured with multiple fiber laser modules 12 which have respective feeding fibers 23 operatively connected to one another in a combiner 14 which emits a high quality signal light at a predetermined wavelengths, such as 1070 nm given here only as one of numerous possible wavelengths.

The signal light is coupled into a multimode delivering fiber 25 launching the light into a laser head 18. As known to one of ordinary skills in the industrial fiber laser system arts, laser head 18 is configured with focusing optics 58 directing signal light towards a workpiece 20. During the incidence of focused signal light 30 onto the surface of workpiece 20, the surface begins to melt with the generation of backreflected light emission which propagates towards the upstream of HPFL 10 through head 18 and combiner 14 towards lasers modules 12. A backreflected signal light is also propagates back to the outputs of the respective laser modules. The combined backreflected signal 34 is coupled into assembly 16 operative to monitor backreflected radiation spectrum between about 400 nm to about 2000nm, as discussed below.

When, for example, workpiece 20 is being cut or welded, emission from the molten material and reflected light at the wavelength of the signal light can be simultaneously monitored. Depending on the processing parameters of the laser modules, the melt can change. The thermal emission is sensitive to the cutting/welding front, depth of the cut and other characteristics of the cutting/welding process and, if properly monitored, may provide useful information of the quality of the work product. On the other hand, the backreflected radiation may be indicative of the absorption of the laser power, which depends on the wavelength, and the stability of the power density. Overall, light 34, further referred as backreflected radiation, is characterized by a spectrum which is evaluated by monitoring assembly 16 and further compared to the reference in a central processing unit (CPU) 26.

In accordance with one aspect of the disclosure, at least one or multiple feeding fibers 23 are in optical communication with monitoring assembly 16 via a control signal fiber 24. The backreflected radiation 34 leaving combiner 14 is uniformly distributed between feeding fibers 23 and, therefore, light coupled into monitoring unit 16 is indicative of the conditions of the process. Alternatively, instead of control signal fiber 24, combiner 14 can be configured with one or more extra fibers 28 connected directly to monitoring assembly 16. The monitoring assembly 16 may be configured with monitoring devices selected from spectroscopes, interferometers and photodiodes and operative to process the coupled backreflected radiation.

FIG. 3 illustrates an exemplary configuration of monitoring assembly 16 operative to detect visible, NIR and/or UV wavelength ranges of backreflected radiation (Li) 34 and output signal or signals Io which further match to a reference value — respective empirically determined desired ranges in CPU 26. If no match is determined, CPU 28 generates a control signal Ic coupled into the laser modules so as to modulate parameters of the lasers improving the work product, i.e., a cut, weld or any other operational results.

The control signal fiber 24, for example, is coupled into an SMA 21 mounted to the housing of assembly 16 and optically connected to a fiber collimator (not shown) operative to focus backreflected radiation (Li) 34 inside the housing. The focused radiation is incident upon the input port of a light-guiding component configured to direct the focused radiation along one or more measuring paths towards optoelectronic components.

The light-guiding component may be selected from beam splitters (not shown), circulators and the like. As shown in FIG. 3, the light-guiding component is configured as a circulator 36 having an input and one or more output ports optically coupled to respective photodiodes. Given only as an example, three output ports of circulator 36 are associated with respective optical filters, which are not shown but well known to a POSITA, which in turn are optically connected to respective photodiodes 32, 34 and 38.

One of the photodiodes, for example 32, is operative to detect the process emission in the wavelength range between about 400 nm and about 1000 nm (in the following Visible signal). This photodiodes ensure the evaluation of the process emission related to both continuous thermal emission and backreflected radiations. Visible domain can be divided into two main ranges, (400 nm- 550 nm) and (550nm — 800nm), to better represent continuous emission shifts. Thus, in this configuration very low levels of incoming light can be catch by each of the photodiode in the visible range, requiring complex solutions for signal conditioning.

The other two photodiodes are used to collect NIR radiation. The first one 34 is filtered with a laser line filter and is operative to evaluate backreflected or backscattering signal light. This photodiode is aimed at monitoring completely penetrated welds, where the aperture of the key hole on the root side of the welds shows a high attenuation of the laser beam backscattering.

The other photodiode 38 collects emission between 1150 nm and 1800 nm passed through a respective filter. The acquired signal is related to the near infrared thermal emission of the process. Generally the time behavior of this photodiode is comparable to the one of the visible signals and their comparison can also warrant control of focus position by chromatic aberration analysis.

The signals from the photodiodes are acquired, conditioned and sampled by CPU 26. If the obtained spectrum in any of the detected ranges does not substantially match the stored reference values, a control sign Ic is output to the laser modules whose parameters, such as output power, are continuously adjusted to obtain the desired spectra of the backreflected radiation.

Referring to FIGS. 1 and 3A-3B, one of many salient features of the disclosed material processing system includes a high quality beam incident on the surface of workpiece 20. The beam quality may be characterized by an $M^2$ factor, as well known to a person of ordinary skills in the art (POSITA). The lower the $M^2$ factor, the higher the beam quality. In some applications, the beam quality factor is not critical, in others, as rather typical a case, it is.

In case of the high beam quality beam parameter, combiner 14 should output an optimally small far-field divergence signal light 30 characterized by the smallest possible $M^2$ factor. In other words, any further reduction of this factor would be associated with deteriorating beam quality. The $M^2$ factor of the combiner's output is determined in as

$$M^2 = \frac{NAmeasured}{NAideal}$$

where NA is a numerical aperture of the combiner

The feeding single mode fibers 23 are initially arranged in accordance with FIG. 3A and then are heated and stretched. During the stretching, the claddings of respective fibers 23 gradually merge with one another to eventually define the outer boundary of the combiner's output, i.e., multimode delivering fiber 25 of FIG. 3B. Preferably, outputs of respective fiber laser modules supported by respective feeding fibers 23 each are substantially in a fundamental mode. While the numerical aperture and diameter of each fiber 23 reduce, its mode, which has substantially a Gaussian profile ($M^2$ is about 1) enlarges. If the attenuation of each feeding fiber 23 is not controlled, than the modes may reach the fiber cladding. This, in turn, leads to deterioration of combiner's output. Accordingly, the output of disclosed combiner 14 owns its high quality to the preservation of substantially Gaussian shape supported by each individual SM fiber 23. The latter, in turn, has a controlled minimal possible numerical aperture (NA) below which the single mode in this fiber touches the cladding.

In order to avoid the coupling of any single mode into the cladding of combiner 14 shown in dash lines in FIG. 3B, the numerical apertures (NA) of each feeding fiber 23 and combiner 14 are continuously measured and compared to the stored reference value. Once the ratio between the measured NA of combiner 14 (as a function of the effective area, i.e., area limited by a circumference around tops of respective modes), is determined and compared to a stored reference value in CPU 26. Accordingly, multimode delivering fiber 25 controllably supports a high quality signal light 30.

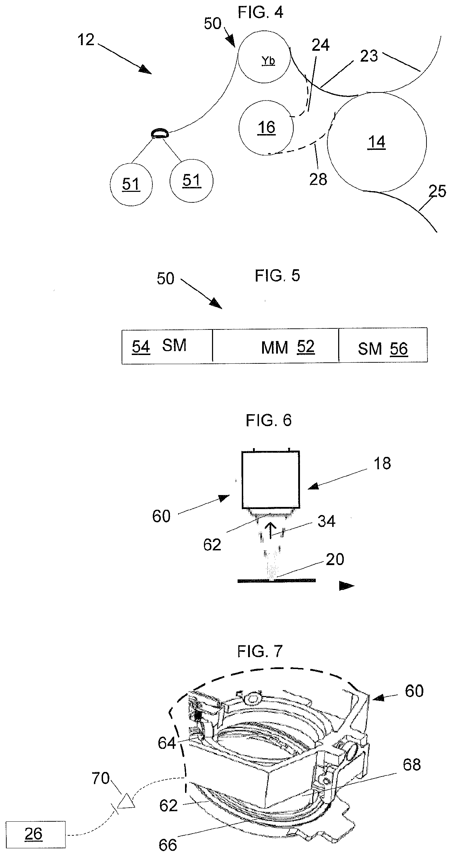

FIG. 4 illustrates laser module 12. In accordance with a further salient feature of the disclosure, the module has a housing enclosing one or more gain blocks 50. For example, block 50 may be configured with a single-stage laser or oscillator generating a 500 or more watt output. In a further modification, each module 12 may be configured with multiple fiber gain blocks 50 including serially coupled oscillators and fiber amplifiers. The fiber block receives pump light generated by a pump assembly which may be configured with another single mode fiber laser or lasers 51 which in turn are pumped by multiple broad-area laser diodes (not shown). The pumping arrangement may be configured as a side- or end-pumping arrangement.

FIG. 5 illustrates the configuration of fiber gain block 50 which preferably generates radiation in a substantially single fundamental mode which, as known to a POSITA, contains maximum light power. The gain block 50 includes an active fiber 52 having a multimode (MM) core which is doped with ions of rare-earth elements. The MM core is configured to support substantially a fundamental mode at the desired wavelength. The opposite ends of active fiber 52 are butt-spliced to respective ends of SM passive input and output fibers 54, 56. To prevent the excitation of higher modes and therefore loss of light at splice regions, the active and passive fibers are configured with substantially identical mode field diameters. The output passive fibers 54 are fused to respective feeding fibers 23, which, in turn, are coupled together to define fiber combiner 14.

Referring to FIGS. 1, 6 and 7, the backreflected radiation 34 also creates unfavorable conditions for focusing optics 58 of laser head 18. In particular, the thermal diffusion is accompanied by material particles leaving the surface of workpiece 20 and impinging upon the opposing component of optics, such as a protective transparent shield 68. The damage to shield 68 inflicted by impinging particles causes the loss of light propagating through protective glass, inferior material processing results and damage to focusing optics 58 of head 18.

When shield 68 is not compromised, there is practically no light scattered through the shield. However, if shield 68 is damaged, scattering light may be detected and evaluated in CPU 26 (FIG. 1). If the power threshold for the scattered light exceeds the empirically selected threshold, fiber laser system 10 should be shut down.

In accordance with a further aspect of the disclosure, the scattering light is detected by a fiber 66 removably around the perimeter of a shield holder 62. If the shield 68 is damaged, scattering light tends to propagate in all directions. Necessarily propagating through fiber 66, the scattering light is further guided by this fiber to an optoelectronic component 70 which is operatively connected to CPU 26 or any other controller. If shield 68 is determined to be unacceptable for further use, holder 62, which is pivotally mounted to the housing of laser head 18, can be easily opened to grant access to the shield.

Although there has been illustrated and described in specific detail and structure of operations, it is understood that the same were for purposes of illustration and that changes and modifications may be made readily therein by those skilled in the art without departing of the scope of the claims.

**Claims**

1. A high power fiber laser system (10) for processing a workpiece (20), comprising:

   - a plurality of laser modules (12) each having an output feeding single mode fiber (23) which supports and guides laser radiation towards the workpiece (20), wherein

      - the laser modules (12) each are configured with an active fiber (52) and input and output passive fibers (56, 54) butt-spliced to respective opposite ends of the active fiber (52), the active fiber (52) having a multimode core doped with a gain medium and configured to support propagation of a single mode at a desired wavelength, the passive fibers (56, 54) each being single mode fibers and having a mode field diameter (MFD) substantially equal to an MFD of the active fiber (52) and
      - the laser modules (12) each further have a pumping unit provided with one or multiple single mode fiber lasers (51);

   - a fiber combiner (14) having the output feeding single mode fibers (23) of the respective modules (12) coupled together into a multimode delivery fiber (25) which guides combined laser radiation from the laser modules (12) along a light path, the output feeding single mode fibers (23) each supporting a mode which has substantially a Gaussian profile with a beam quality factor ($M^2$) about 1,
   - the optical combiner (14) being configured so that the combined laser radiation has a minimally possible beam quality factor ($M^2$) obtainable by

      - coupling a plurality of single mode output laser beams into the respective output feeding single mode fibers (23);
      - stretching the output feeding single mode fibers (23) while monitoring numerical apertures (NAs) of each individual output feeding single mode fiber (23) so as to prevent coupling of a Gaussian-profile mode into a cladding of the output feeding single mode fiber (23);
      - simultaneously with stretching coupling the output feeding single mode fibers (23) together so as to provide for the fiber combiner (14) with the output multimode delivery (25) fiber);

   - a laser head (58) receiving the combined laser radiation and operative to direct the combined laser radiation towards a surface of the workpiece (20) so as cause a backreflected radiation (34) to propagate backwards along the light path through the laser head (58), delivery fiber (25) and combiner (14) towards the laser modules (12); and
   - a monitoring assembly (16) receiving the backreflected radiation (34) and operative to detect a spectrum of the backreflected radiation (34).

2. The high power fiber laser system of claim 1 further comprising a control signal fiber receiving the backreflected radiation from one or more of the feeding fibers and delivering the backreflected radiation to the monitoring assembly.

3. The high power fiber laser system of claim 1, wherein the fiber combiner is configured with an additional control signal fiber delivering the backreflected radiation to the monitoring assembly.

4. The high power fiber laser system of claim 1 further comprising a controller receiving the detected spectrum from the monitoring assembly and operative to match the detected spectrum to a reference value, the backreflected radiation including thermal emission and backreflected laser signals in UV, NIR and visible ranges from about 400 nm to about 2000 nm.

5. The high power fiber laser system of claim 1, wherein the feeding fibers are configured as respective single mode fibers each with a minimally possible small numerical aperture (NA) which, upon coupling the feeding fibers together, provide for the minimally possible beam quality factor ($M^2$) of the combined laser radiation.

6. The high power fiber laser system of claim 1, wherein the monitoring assembly is configured with an optical guide component selected from the group consisting of beam splitters, isolators and circulators which are operative to route the backreflected along multiple light paths within the monitoring assembly, and sensors selected from the group consisting of spectroscopes, interferometers and photodiodes optically coupled to the respective optical guide components.

7. The high power fiber laser system of claim 1, wherein the laser head has a protective shield opposing the workpiece, and a sensing fiber surrounding the protective shield and operative to detect scattering light indicative of a damage of the protective shield.

8. A method of operating the high power fiber laser system (10) of claim 1

- coupling a plurality of single mode output laser beams into respective output feeding single mode fibers (23);
- stretching the output feeding single mode fibers (23) while monitoring numerical apertures (NAs) of each individual output feeding single mode fiber (23) so as to prevent coupling of a Gaussian-profile mode into a cladding of the output feeding single mode fiber (23);
- simultaneously with stretching coupling the output feeding single mode fibers (23) together so as to provide for a fiber combiner (14) with an output multimode delivery (25) fiber which guides a combined multimode output laser radiation towards a workpiece (20) to be laser treated, the laser radiation having a lowest possible beam quality factor ($M^2$) due to the preservation of the Gaussian-profile mode with a beam quality factor ($M^2$) about 1 supported by each individual output feeding single mode fiber (23),;
- coupling backreflected radiation (34) generated in response to the combined laser radiation incident on a surface of the workpiece (20) into the delivery fiber (25), which guides the coupled backreflected radiation (34) to the combiner (14); and
- monitoring the backreflected radiation (34) received from the combiner (14) so as to detect a spectrum of the backreflected radiation.

9. The method of claim 8, wherein the combiner has an additional control signal fiber launching the backreflected radiation onto the monitoring assembly.

10. The method of claim 8 further comprising monitoring scattered light indicative of a damaged protective shield which is configured to prevent penetrations of particles of the workpiece accompanying the backreflected radiation into a laser head located between the delivery fiber and the workpiece.

11. The method of claim 10 further comprising providing a fiber around the shield so as to receive the scattered light, and matching the received scattered with a reference value.

**Patentansprüche**

1. Hochleistungsfaserlasersystem (10) zum Bearbeiten eines Werkstücks (20), das Folgendes umfasst:

- eine Mehrzahl von Lasermodulen (12), die jeweils eine Ausgangs-Einmoden-Feeding-Faser (23) aufweisen, die Laserstrahlung unterstützt und zu dem Werkstück (20) leitet, wobei

- die Lasermodule (12) jeweils mit einer aktiven Faser (52) und mit jeweils entgegengesetzten Enden der aktiven Faser (52) stoßverbundenen passiven Eingangs- und Ausgangsfasern (56, 54) ausgebildet sind, wobei die aktive Faser (52) einen Multimodenkern, der mit einem Verstärkungsmedium dotiert ist und dazu ausgebildet ist, Ausbreitung einer Einzelmode bei einer gewünschten Wellenlänge zu unterstützen, aufweist, wobei die passiven Fasern (56, 54) jeweils Einmodenfasern sind und einen Modenfelddurchmesser (MFD) im Wesentlichen gleich einem MFD der aktiven Faser (52) aufweisen, und
- die Lasermodule (12) jeweils weiter eine Pumpeinheit aufweisen, die mit einem oder mehreren Einmodenfaserlasern (51) versehen sind;

- einen Faserkombinierer (14), der die Ausgangs-Einmoden-Feeding-Fasern (23) der jeweiligen Module (12) miteinander in eine Multimodentransportfaser (25) gekoppelt aufweist, die kombinierte Laserstrahlung von den Lasermodulen (12) entlang eines Lichtpfads leitet, wobei die Ausgangs-Einmoden-Feeding-Fasern (23) jeweils eine Mode unterstützen, die im Wesentlichen ein Gaußsches Profil mit einem Strahlqualitätsfaktor ($M^2$) von etwa 1 aufweist,
- der optische Kombinierer (14) dazu ausgebildet ist, dass die kombinierte Laserstrahlung einen minimalmöglichen Strahlqualitätsfaktor ($M^2$) aufweist, der durch Folgendes erhältlich ist

- Koppeln einer Mehrzahl von Einmoden-Ausgangslaserstrahlen in die jeweiligen Ausgangs-Einmoden-Feeding-Fasern (23);
- Dehnen der Ausgangs-Einmoden-Feeding-Fasern (23), während numerische Aperturen (NAs) jeder einzelnen Ausgangs-Einmoden-Feeding-Faser (23) überwacht werden, um Koppeln einer Gaußschen Profilmode in eine Ummantelung der Ausgangs-Einmoden-Feeding-Faser (23) zu verhindern;
- gleichzeitig mit Dehnen, Koppeln der Ausgangs-Einmoden-Feeding-Fasern (23) miteinander, um den Faserkombinierer (14) mit der Ausgangs-Multimodentransportfaser (25) vorzusehen;

- einen Laserkopf (58), der die kombinierte Laserstrahlung empfängt und betriebsfähig ist, die kombinierte Laserstrahlung zu einer Oberfläche des Werkstücks (20) zu richten, um eine zurückreflektierte Strahlung (34) zu veranlassen, sich entlang des Lichtpfads durch den Laserkopf (58), die Transportfaser (25) und den Kombinierer (14) zurück zu den Lasermodulen (12) auszubreiten; und
- eine Überwachungsbaugruppe (16), die die rückreflektierte Strahlung (34) empfängt und betriebsfähig ist, ein Spektrum der rückreflektierten Strahlung (34) zu detektieren.

2. Hochleistungsfaserlasersystem nach Anspruch 1, weiter umfassend eine Steuersignalfaser, die die rückreflektierte Strahlung von einer oder mehreren der Feeding-Fasern empfängt und die rückreflektierte Strahlung der Überwachungsbaugruppe zuleitet.

3. Hochleistungsfasersystem nach Anspruch 1, wobei der Faserkombinierer mit einer zusätzlichen Steuersignalfaser ausgebildet ist, die die rückreflektierte Strahlung der Überwachungsbaugruppe zuleitet.

4. Hochleistungsfasersystem nach Anspruch 1, weiter umfassend eine Steuerung, die das detektierte Spektrum von der Überwachungsbaugruppe empfängt und betriebsfähig ist, das detektierte Spektrum mit einem Referenzwert abzugleichen, wobei die rückreflektierte Strahlung Wärmeemission und rückreflektierte Lasersignale in UV, NIR und sichtbaren Bereichen von etwa 400 nm bis etwa 2000 nm beinhaltet.

5. Hochleistungsfaserlasersystem nach Anspruch 1, wobei die Feeding-Fasern als jeweilige Einmodenfasern mit jeweils einer kleinstmöglichen nummerischen Apertur (NA) ausgebildet sind, die, beim Koppeln der Feeding-Fasern miteinander, den kleinstmöglichen Strahlqualitätsfaktor ($M^2$) der kombinierten Laserstrahlung vorsehen.

6. Hochleistungsfaserlasersystem nach Anspruch 1, wobei die Überwachungsbaugruppe mit einer optischen Leitkomponente, ausgewählt aus der Gruppe bestehend aus Strahlteilern, Isolatoren und Zirkulatoren, die betriebsfähig sind, das Rückreflektierte entlang mehrerer Lichtpfade innerhalb der Überwachungsbaugruppe zu leiten, und Sensoren, ausgewählt aus der Gruppe bestehend aus Spektroskopen, Interferometern und Fotodioden, die optisch mit den jeweiligen optischen Leitkomponenten gekoppelt sind, ausgebildet ist.

7. Hochleistungsfaserlasersystem nach Anspruch 1, wobei der Laserkopf eine Abschirmung gegenüber dem Werkstück und eine Erfassungsfaser, die die Abschirmung umgibt und betriebsfähig ist, Streulicht zu detektieren, das einen Schaden der Abschirmung angibt, aufweist.

8. Verfahren zum Betreiben des Hochleistungsfaserlasersystems (10) nach Anspruch 1, das Folgendes umfasst:

- Koppeln einer Mehrzahl von Einmoden-Ausgangslaserstrahlen in die jeweiligen Ausgangs-Einmoden-Feeding-Fasern (23);
- Dehnen der Ausgangs-Einmoden-Feeding-Fasern (23), während numerische Aperturen (NAs) jeder einzelnen Ausgangs-Einmoden-Feeding-Faser (23) überwacht werden, um Koppeln einer Gaußschen Profilmode in eine Ummantelung der Ausgangs-Einmoden-Feeding-Faser (23) zu verhindern;
- gleichzeitig mit Dehnen, Koppeln der Ausgangs-Einmoden-Feeding-Fasern (23) miteinander, um den Faserkombinierer (14) mit einer Ausgangs-Multimodentransportfaser (25) vorzusehen, die eine kombinierte Multimodenausgangslaserstrahlung zu einem mit Laser zu behandelnden Werkstück (20) leitet, wobei die Laserstrahlung einen möglichst niedrigen Strahlqualitätsfaktor ($M^2$) aufgrund des Erhaltens der Gaußschen Profilmode mit einem Strahlqualitätsfaktor ($M^2$) von etwa 1 aufweist, die von jeder einzelnen Ausgangs-Einmoden-Feeding-Faser (23) unterstützt wird;
- Koppeln von rückreflektierter Strahlung (34), die in Reaktion auf die kombinierte Laserstrahlung erzeugt wird, die auf eine Oberfläche des Werkstücks (20) einfällt, in die Transportfaser (25), die die gekoppelte rückreflektierte Strahlung (34) zu dem Kombinierer (14) leitet; und
- Überwachen der rückreflektierten Strahlung (34), die von dem Kombinierer (14) empfangen wurde, um ein Spektrum der rückreflektierten Strahlung zu detektieren.

9. Verfahren nach Anspruch 8, wobei der Kombinierer eine zusätzliche Steuersignalfaser aufweist, die die rückreflektierte Strahlung auf die Überwachungsbaugruppe wirft.

10. Verfahren nach Anspruch 8, weiter umfassend Überwachen von gestreutem Licht, das eine beschädigte Abschirmung angibt, die dazu ausgebildet ist, Durchdringungen von Partikeln des Werkstücks gemeinsam mit der rückreflektierten Strahlung in einen Laserkopf zu verhindern, der zwischen der Transportfaser und dem Werkstück liegt.

11. Verfahren nach Anspruch 10, weiter umfassend Vorsehen einer Faser um die Abschirmung, um das Streulicht zu empfangen, und Abgleichen des empfangenen Gestreuten mit einem Referenzwert.

**Revendications**

1.  Système laser à fibres de grande puissance (10) pour traiter une pièce d'ouvrage (20), comprenant :

    - une pluralité de modules laser (12) ayant chacun une fibre monomode d'alimentation de sortie (23) qui prend en charge et guide un rayonnement laser vers la pièce d'ouvrage (20), dans lequel

      - les modules laser (12) sont chacun configurés avec une fibre active (52) et des fibres passives d'entrée et de sortie (56, 54) raccordées bout à bout à des extrémités opposées respectives de la fibre active (52), la fibre active (52) ayant une âme multimode dopée avec un milieu de gain et configurée pour prendre en charge une propagation d'un rayonnement monomode à une longueur d'onde souhaitée, les fibres passives (56, 54) étant chacune des fibres monomodes et ayant un diamètre de champ de mode (MFD) sensiblement égal à un MFD de la fibre active (52), et
      - les modules laser (12) ont en outre chacun une unité de pompage pourvue d'un ou plusieurs lasers à fibres monomodes (51) ;

    - un combineur de fibres (14) ayant les fibres monomodes d'alimentation de sortie (23) des modules (12) respectifs couplées les unes aux autres dans une fibre de distribution multimode (25) qui guide un rayonnement laser combiné depuis les modules laser (12) le long d'un trajet lumineux, les fibres monomodes d'alimentation de sortie (23) prenant chacune en charge un mode qui a sensiblement un profil gaussien avec un facteur de qualité de faisceau ($M^2$) d'environ 1,
    - le combineur optique (14) étant configuré de sorte que le rayonnement laser combiné ait un facteur de qualité de faisceau minimalement possible ($M^2$) pouvant être obtenu par :

      - le couplage d'une pluralité de faisceaux laser de sortie monomode dans les fibres monomodes d'alimentation de sortie (23) respectives ;
      - l'étirage des fibres monomodes d'alimentation de sortie (23) tout en surveillant des ouvertures numériques (NAs) de chaque fibre monomode d'alimentation de sortie (23) individuelle de manière à empêcher le couplage d'un mode de profil gaussien dans une gaine de la fibre monomode d'alimentation de sortie (23) ;
      - simultanément avec l'étirage, le couplage des fibres monomodes d'alimentation de sortie (23) les unes aux autres de manière à fournir la fibre de distribution multimode de sortie (25) au combineur de fibres (14) ;

    - une tête laser (58) recevant le rayonnement laser combiné et opérationnelle pour diriger le rayonnement laser combiné vers une surface de la pièce d'ouvrage (20) de manière à amener un rayonnement rétroréfléchi (34) à se propager vers l'arrière le long du trajet lumineux à travers la tête laser (58), la fibre de distribution (25) et le combineur (14) vers les modules laser (12) ; et
    - un ensemble de surveillance (16) recevant le rayonnement rétroréfléchi (34) et opérationnel pour détecter un spectre du rayonnement rétroréfléchi (34).

2.  Système laser à fibres de grande puissance selon la revendication 1, comprenant en outre une fibre de signal de commande recevant le rayonnement rétroréfléchi depuis une ou plusieurs parmi les fibres d'alimentation et distribuant le rayonnement rétroréfléchi à l'ensemble de surveillance.

3.  Système laser à fibres de grande puissance selon la revendication 1, dans lequel le combineur de fibres est configuré avec une fibre de signal de commande supplémentaire distribuant le rayonnement rétroréfléchi à l'ensemble de surveillance.

4.  Système laser à fibres de grande puissance selon la revendication 1, comprenant en outre un dispositif de commande recevant le spectre détecté depuis l'ensemble de surveillance et opérationnel pour adapter le spectre détecté à une valeur de référence, le rayonnement rétroréfléchi incluant une émission thermique et des signaux laser rétroréfléchis dans des plages de lumière UV, NIR et visible depuis environ 400 nm à environ 2000 nm.

5.  Système laser à fibres de grande puissance selon la revendication 1, dans lequel les fibres d'alimentation sont configurées en tant que fibres monomodes respectives ayant chacune une petite ouverture numérique (NA) minimalement possible qui, lors du couplage des fibres d'alimentation les unes aux autres, fournissent le facteur de qualité de faisceau minimalement possible ($M^2$) du rayonnement laser combiné.

6.  Système laser à fibres de grande puissance selon la revendication 1, dans lequel l'ensemble de surveillance est configuré avec :

    un composant de guide optique sélectionné dans le groupe se composant de diviseurs de faisceau,

d'isolateurs et de circulateurs qui sont opérationnels pour acheminer le rayonnement rétroréfléchi le long de plusieurs trajets lumineux à l'intérieur de l'ensemble de surveillance, et de capteurs sélectionnés dans le groupe se composant de spectroscopes, d'interféromètres et de photodiodes couplés optiquement aux composants de guide optique respectifs.

**7.** Système laser à fibres de grande puissance selon la revendication 1, dans lequel la tête laser a un bouclier protecteur à l'opposé de la pièce d'ouvrage, et une fibre de détection entourant le bouclier protecteur et opérationnelle pour détecter une lumière de diffusion indicative d'une détérioration du bouclier protecteur.

**8.** Procédé de fonctionnement du système laser à fibres de grande puissance (10) selon la revendication 1, comprenant :

- le couplage d'une pluralité de faisceaux laser de sortie monomode dans des fibres monomodes d'alimentation de sortie (23) respectives ;
- l'étirage des fibres monomodes d'alimentation de sortie (23) tout en surveillant des ouvertures numériques (NAs) de chaque fibre monomode d'alimentation de sortie (23) individuelle de manière à empêcher le couplage d'un mode de profil gaussien dans une gaine de la fibre monomode d'alimentation de sortie (23) ;
- simultanément avec l'étirage, le couplage des fibres monomodes d'alimentation de sortie (23) les unes aux autres de manière à fournir, à un combineur de fibres (14), une fibre de distribution multimode de sortie (25) qui guide un rayonnement laser de sortie multimode combiné vers une pièce d'ouvrage (20) à traiter par laser, le rayonnement laser ayant un facteur de qualité de faisceau possible (M$^2$) le plus bas en raison de la préservation du mode de profil gaussien avec un facteur de qualité de faisceau (M$^2$) d'environ 1 pris en charge par chaque fibre monomode d'alimentation de sortie individuelle (23) ;
- le couplage d'un rayonnement rétroréfléchi (34) généré en réponse au rayonnement laser combiné incident sur une surface de la pièce d'ouvrage (20) dans la fibre de distribution (25), qui guide le rayonnement rétroréfléchi (34) couplé vers le combineur (14) ; et
- la surveillance du rayonnement rétroréfléchi (34) reçu depuis le combineur (14) de manière à détecter un spectre du rayonnement rétroréfléchi.

**9.** Procédé selon la revendication 8, dans lequel le combineur a une fibre de signal de commande supplémentaire lançant le rayonnement rétroréfléchi sur l'ensemble de surveillance.

**10.** Procédé selon la revendication 8, comprenant en outre la surveillance d'une lumière diffusée indicative d'un bouclier protecteur endommagé qui est configuré pour empêcher toute pénétration de particules de la pièce d'ouvrage accompagnant le rayonnement rétroréfléchi dans une tête laser située entre la fibre de distribution et la pièce d'ouvrage.

**11.** Procédé selon la revendication 10, comprenant en outre la fourniture d'une fibre autour du bouclier de manière à recevoir la lumière diffusée, et l'adaptation de la lumière diffusée reçue à une valeur de référence.

FIG. 1

Fig. 2

FIG. 3A

FIG. 3B

FIG. 4

12

50

Yb

24

23

16

14

28

25

51  51

FIG. 5

50

| 54  SM | MM  52 | SM  56 |
|--------|--------|--------|

FIG. 6

18

60

62

34

20

FIG. 7

60

64

68

70

62

26

66

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004068652 A